# EUROPEAN PATENT APPLICATION

(11) **EP 2 544 294 A1**
(43) Date of publication of application: **09.01.2013**
(21) Application number: 12174560.8
(22) Date of filing: 02.07.2012
(51) Int. Cl.: H01M 10/50

(54) **Arrangement for regulating the temperature of a battery**

(30) Priority: 04.07.2011 JP 2011148339
(71) Applicant: KABUSHIKI KAISHA TOYOTA JIDOSHOKKI, Kariya-shi, Aichi-ken 448-8671 (JP)
(72) Inventor: Katagiri, Yoshihiro, Kariya-shi, Aichi 448-8671 (JP)
(74) Representative: TBK

(57) **Abstract**

An arrangement for regulating the temperature of a battery is provided in which plural battery cells are arranged in alignment with each other and each of the battery cells has positive and negative terminals projecting therefrom in the same direction. The arrangement includes a heat exchanger provided between the battery cells, a supply portion through which heat medium is supplied to the heat exchanger, and a discharge portion through which heat medium is discharged out of the heat exchanger. The supply portion and the discharge portion extend in the direction of the alignment of the battery cells. At least one of the supply portion and the discharge portion is provided between the positive terminals and the negative terminals of the battery cells.

## Description

### BACKGROUND OF THE INVENTION

The present invention relates to a battery temperature regulator for use in a battery module.

There has been known a battery module including an assembled battery composed of plural battery cells and a temperature regulator for regulating the temperature of the assembled battery. In a known battery module disclosed for example in Japanese Unexamined Patent Application Publication No. 2008-305575, plural battery cells are arranged in alignment with each other to form an assembled battery. The temperature regulator for the battery module includes plural heat exchangers provided between the respective battery cells, a supply portion through which heat medium is supplied to the heat exchangers, and a discharge portion through which heat medium is discharged out of the heat exchangers. The supply portion and the discharge portion are provided on opposite lateral sides of the assembled battery. In the battery module of such structure, regulation of the temperature of the battery cells is accomplished by flowing heat medium through the heat exchangers disposed between the battery cells.

In the structure disclosed in the publication No. 2008-305575, however, the provision of the supply portion and the discharge portion on opposite lateral sides of the assembled battery causes an increase in the size of the battery module in the direction perpendicular to the alignment of the battery cells.

The present invention is directed to providing a battery temperature regulator that allows reduction of the size of the battery module.

### SUMMARY OF THE INVENTION

In accordance with an aspect of the present invention, a battery temperature regulator is provided for use with an assembled battery in which plural battery cells are arranged in alignment with each other and each of the battery cells has positive and negative terminals projecting therefrom in the same direction. The battery temperature regulator includes a heat exchanger provided between the battery cells, a supply portion through which heat medium is supplied to the heat exchanger, and a discharge portion through which heat medium is discharged out of the heat exchanger. The supply portion and the discharge portion extend in the direction of the alignment of the battery cells. At least one of the supply portion and the discharge portion is provided between the positive terminals and the negative terminals of the battery cells.

Other aspects and advantages of the invention will become apparent from the following description, taken in conjunction with the accompanying drawings, illustrating by way of example the principles of the invention.

### BRIEF DESCRIPTION OF THE DRAWINGS

Fig. 1 is a perspective view of a battery module having a battery temperature regulator according to an embodiment of the present invention;
Fig. 2 is a sectional view of a heat exchanger of the battery temperature regulator of Fig. 1; and
Fig. 3 is a sectional view of another embodiment of the battery module.

### DETAILED DESCRIPTION OF THE EMBODIMENTS

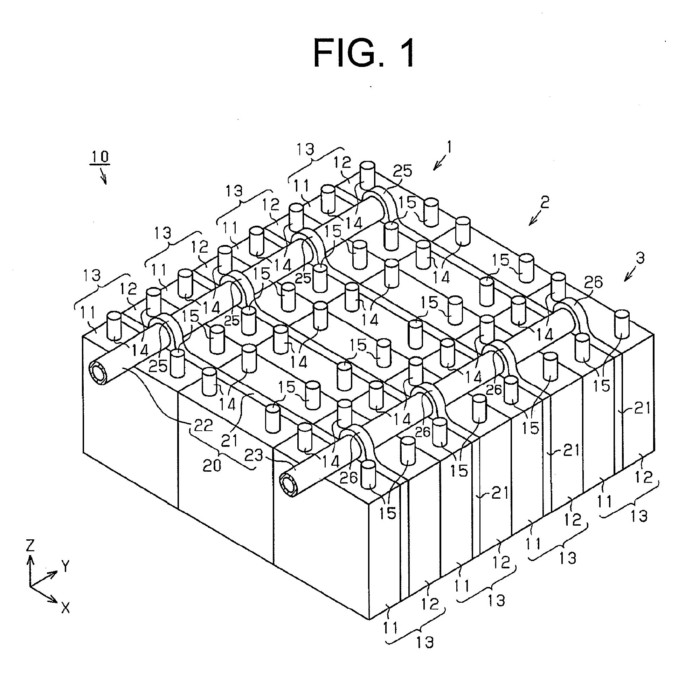

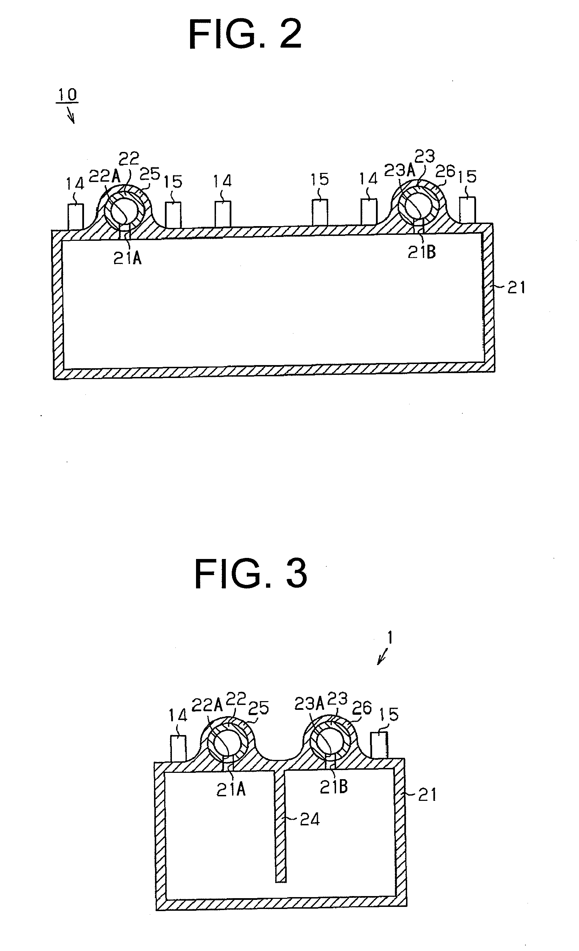

The following will describe a battery module having a battery temperature regulator according to the embodiment of the present invention with reference to Figs. 1 and 2. Referring to Fig. 1, the battery module designated generally by 10 includes an assembled battery 1 that is composed of eight rectangular batteries such as 11, 12 arranged in alignment with each other in the direction of thickness thereof or in Y-axis direction in Fig. 1. That is, the direction in which the batteries 11, 12 are arranged is the same as the direction of thickness of the batteries 11, 12. The batteries 11,12 are the same in structure, but designated by different reference numerals for the sake of explanation. The adjacent two batteries 11, 12 form one battery group 13. In the battery group 13, the batteries 11, 12 correspond to the plural battery cells of the present invention. In the present embodiment, four battery groups 13 are integrated to form the assembled battery 1.

In the assembled battery 1, each of the batteries 11, 12 has on the upper surface thereof a positive terminal 14 and a negative terminal 15 projecting upward or in Z-axis direction in Fig. 1. The positive terminal 14 and the negative terminal 15 are spaced from each other in the direction of width of the batteries 11,12 or in X-axis direction in Fig. 1. The batteries 11, 12 discharge through their respective positive and negative terminals 14, 15.

In the present embodiment, three assembled batteries such as 1 are arranged in the direction of width of the batteries 11, 12 in contact with each other. In other words, plural assembled batteries are arranged in the direction perpendicular to the alignment of the batteries 11, 12. In the following description, the three assembled batteries are designated by different reference numerals 1, 2, 3 for the sake of explanation.

The following will describe in detail the battery temperature regulator 20 provided for the assembled batteries 1, 2, 3. The battery temperature regulator 20 includes plural heat exchangers 21, a supply pipe 22 and a discharge pipe 23. The heat exchanger 21 is in the form of a rectangular plate. In the adjacent three battery groups 13 arranged in the X-axis direction, the three batteries 11 cooperate with their associated three batteries 12 to hold therebetween the same heat exchanger 21. That is, the heat exchanger 21 is provided between the battery cells. In the present embodiment, each of the assembled batteries 1, 2, 3 has four battery groups 13 and hence has four heat exchangers 21.

The height of the heat exchanger 21 as measured in the Z-axis direction is substantially the same as that of the batteries 11, 12, and the width of the heat exchanger 21 as measured in the X-axis direction is approximately three times as large as that of the respective batteries 11, 12. That is, the width of the heat exchanger 21 is set depending on the number of assembled batteries 1, 2, 3. In such structure, the same heat exchanger 21 is held in common in the adjacent battery groups 13 arranged in the X-axis direction.

Heat medium such as water, air or organic solvent is supplied through the supply pipe 22 to the heat exchangers 21 and then discharged out of the heat exchangers 21 through the discharge pipe 23. The supply pipe 22, the discharge pipe 23 correspond to the supply portion and the discharge portion, respectively, of the present invention. The supply pipe 22 and the discharge pipe 23 extend in the direction of the alignment of the batteries 11, 12.

The heat exchanger 21 has on the upper surface thereof a pair of ring-shaped supports 25, 26 through which the supply pipe 22 and the discharge pipe 23 are inserted and supported respectively.

The support 25 is formed at a position between the positive terminals 14 and the negative terminals 15 of the respective batteries 11, 12 of the assembled battery 1. The support 26 is formed at a position between the positive terminals 14 and the negative terminals 15 of the respective batteries 11, 12 of the assembled battery 3.

The supply pipe 22 supported by the support 25 is provided between the positive terminals 14 and the negative terminals 15 of the respective batteries 11, 12 of the assembled battery 1. The discharge pipe 23 supported by the support 26 is provided between the positive terminals 14 and the negative terminals 15 of the respective batteries 11, 12 of the assembled battery 3.

The supply pipe 22 is mounted to the heat exchanger 21 while being supported by the support 25. The discharge pipe 23 is mounted to the heat exchanger 21 while being supported by the support 26. The supply pipe 22 and the discharge pipe 23 form a part of the heat exchanger 21.

As described above, the supply pipe 22 extending in the Y-axis direction is provided between the positive terminals 14 and the negative terminals 15 of the batteries 11, 12 of the assembled battery 1. The discharge pipe 23 extending in the Y-axis direction is provided between the positive terminals 14 and the negative terminals 15 of the batteries 11, 12 of the assembled battery 3. In other words, the batteries 11, 12 forming the assembled battery 1 are arranged in the direction in which the supply pipe 22 extends, and the batteries 11, 12 forming the assembled battery 3 are arranged in the direction in which the discharge pipe 23 extends. It is noted that the supply pipe 22 or the discharge pipe 23 may extend in a direction that is slightly inclined to the direction in which the batteries 11, 12 are arranged.

The assembled battery 1 and the assembled battery 3 are provided on opposite sides of the battery module 10. That is, the supply pipe 22 and the discharge pipe 23 are provided on the assembled batteries which are spaced away from each other. The supply pipe 22 is connected to the heat exchangers 21 at a position between the positive terminals 14 and the negative terminals 15 of the respective batteries 11, 12 of the assembled battery 1. The discharge pipe 23 is connected to the heat exchangers 21 at a position between the positive terminals 14 and the negative terminals 15 of the respective batteries 11, 12 of the assembled battery 3.

As shown in Fig. 2, the supply pipe 22 is formed therethrough with a hole 22A, and the discharge pipe 23 is formed therethrough with a hole 23A.

The heat exchanger 21 has holes 21A, 21 B associated with the holes 22A, 23A, respectively. The hole 22A and the hole 21A connect between the interior of the heat exchanger 21 and the interior of the supply pipe 22. The hole 23A and the hole 21 B connect between the interior of the heat exchanger 21 and the interior of the discharge pipe 23.

Although not shown in the drawings, heat medium is supplied from a heat medium source to the supply pipe 22 and heat medium discharged from the discharge pipe 23 is returned through a circulator passage back to the heat medium source.

The supply pipe 22 and the discharge pipe 23 of the battery temperature regulator 20 are provided above the batteries 11, 12. Thus, the battery module 10 that is made by integrating the assembled batteries 1, 2, 3 with the battery temperature regulator 20 including the heat exchanger 21, the supply pipe 22 and the discharge pipe 23 causes no increase of the size of the battery module 10 in the direction of width of the batteries 11, 12. The supply pipe 22 is provided between the positive terminals 14 and the negative terminals 15 of the batteries 11, 12 of the assembled battery 1. The discharge pipe 23 is provided between the positive terminals 14 and the negative terminals 15 of the batteries 11, 12 of the assembled battery 3. Since the supply pipe 22 and the discharge pipe 23 are provided in the spaces between the positive and negative terminals 14, 15, no increase of the size of the battery module 10 in the direction of height of the batteries 11, 12 occurs. In this way, the battery temperature regulator 20 of the embodiment causes no increase of the size of the battery module 10 in the direction of width and height of the batteries 11, 12, thereby allowing reduction of the size of the battery module 10 as compared to the conventional case.

The supply pipe 22 is provided between the positive terminals 14 and the negative terminals 15 of the batteries 11, 12 of the assembled battery 1. The discharge pipe 23 is provided between the positive terminals 14 and the negative terminals 15 of the batteries 11, 12 of the assembled battery 3. That is, the supply pipe 22 is spaced away from the discharge pipe 23. Heat medium flows in the interior of the heat exchanger 21 evenly, which facilitates stirring of heat medium in the heat exchanger 21, resulting in an efficient heat exchange for the batteries 11, 12 disposed in contact with the heat exchanger 21.

Since the heat exchangers 21 are provided between the batteries 11, 12 of the respective battery groups 13 of the assembled batteries 1, 2, 3, the batteries 11, 12 of the assembled batteries 1, 2, 3 are in contact at one surfaces thereof with the heat exchangers 21. Thus, all of the batteries 11, 12 are in contact with the heat exchangers 21 for heat exchange with the heat medium flowing through the heat exchangers 21, thereby allowing regulation of the temperature of all batteries 11, 12.

The battery temperature regulator 20 according to the first embodiment offers the following advantages.
(1) Each of the batteries 11, 12 has on the upper surface thereof the positive and negative terminals 14, 15 projecting upward or in Z-axis direction in Fig. 1. The supply pipe 22 is provided between the positive terminals 14 and the negative terminals 15 of the batteries 11, 12 of the assembled battery 1, and the discharge pipe 23 is provided between the positive terminals 14 and the negative terminals 15 of the batteries 11, 12 of the assembled battery 3. Since the supply pipe 22 and the discharge pipe 23 are provided in the spaces between the positive and negative terminals 14, 15, no increase of the size of the battery module 10 in the direction of height of the batteries 11, 12 occurs. Further, the supply pipe 22 and the discharge pipe 23 of the battery temperature regulator 20 are provided above the batteries 11, 12, which causes no increase of the size of the battery module 10 in the direction of width of the batteries 11, 12. In this way, the battery temperature regulator 20 of the embodiment causes no increase of the size of the battery module 10 in the direction of width and height of the batteries 11, 12, thereby allowing reduction of the size of the battery module 10 as compared to the conventional case.
(2) The assembled battery 1 is spaced away from the assembled battery 3. The supply pipe 22 is spaced away from the discharge pipe 23. Heat medium flows in the interior of the heat exchanger 21 evenly, which facilitates stirring of heat medium in the heat exchanger 21, resulting in an efficient heat exchange for the batteries 11, 12 disposed in contact with the heat exchanger 21.
(3) The heat exchangers 21 are provided between the batteries 11, 12 of the respective battery groups 13 of the assembled batteries 1, 2, 3. All of the batteries 11, 12 in the assembled batteries 1, 2, 3 are in contact with the heat exchangers 21, allowing proper regulation of the temperature of the batteries 11, 12.
(4) In the adjacent three battery groups 13 arranged in the X-axis direction, the three batteries 11 cooperate with their associated three batteries 12 to hold therebetween the same heat exchanger 21. Such configuration requires less number of heat exchangers such as 21, supply pipes such as 22 and discharge pipes such as 23 as compared to a case that the heat exchangers 21 are provided in all of the battery groups 13 in the respective assembled batteries 1, 2, 3, thereby allowing reduced manufacturing cost of the battery module 10.

The above-described embodiment may be modified in various ways as exemplified below.

As shown in Fig. 3, the battery temperature regulator 20 may be provided in a single assembled battery such as 1 providing the supply pipe 22 and the discharge pipe 23 between the positive terminals 14 and the negative terminals 15 of the batteries such as 11,12 of the single assembled battery. In this case, the moving distance of heat medium in the heat exchanger 21 is decreased, which may lead to insufficient stirring of heat medium and hence remaining of heat medium after heat exchange in the heat exchanger 21. Thus, it is preferable to provide a partition wall 24 for dividing the interior of the heat exchanger 21, as shown in Fig. 3, so as to facilitate stirring of heat medium for proper heat exchanging.

Either one of the supply pipe 22 and the discharge pipe 23 only have to be provided between the positive and negative terminals 14, 15 of the batteries 11, 12. In the battery module 10, one of the supply pipe 22 and the discharge pipe 23 may be provided between the positive and negative terminals 14, 15 of the batteries 11, 12 of the assembled battery 1, while the other of the supply pipe 22 and the discharge pipe 23 may be provided, for example, on the side surfaces of the batteries 11, 12 of the assembled battery 3.

A spacer such as a resin spacer may be provided between the batteries 11, 12 and the heat exchangers 21.

In each of the batteries 11, 12 of the assembled batteries 1, 2, 3, the positions of the positive terminal 14 and the negative terminal 15 may be opposite. For example, the positions of the positive terminal 14 and the negative terminal 15 may be opposite in specific batteries 11, 12 depending on the manner of connection of batteries in the assembled batteries 1, 2, 3 such as series or parallel connection. Thus, the supply pipe 22 and the discharge pipe 23 may be provided between the positive terminals 14 or between the negative terminals 15.

The number of batteries 11, 12 of the respective assembled batteries 1, 2, 3 may be changed.

The number of assembled batteries 1, 2, 3 may be changed.

The heat exchanger 21 only have to be provided between the batteries 11, 12 of the single battery group 13, and the number of heat exchangers 21 may be decreased or increased.

The heat exchanger 21 may be provided between the battery groups 13 arranged in the direction of thickness of the batteries 11, 12. That is, the heat exchanger 21 may be provided between any two adjacent batteries 11, 12.

Plural battery temperature regulators such as 20 may be provided for the respective assembled batteries 1, 2, 3.

The supply pipe 22 and the discharge pipe 23 may be provided between the positive and negative terminals 14, 15 of any of the assembled batteries 1, 2, 3. For example, the supply pipe 22 may be provided between the negative terminals 15 of the batteries 11, 12 of the assembled battery 1 and the positive terminals 14 of the batteries 11, 12 of the assembled battery 2, while the discharge pipe 23 may be provided between the negative terminals 15 of the batteries 11, 12 of the assembled battery 2 and the positive terminals 14 of the batteries 11, 12 of the assembled battery 3.

Although the supply pipe 22 and the discharge pipe 23 are supported by the supports 25, 26 to form a part of the heat exchanger 21, the heat exchanger 21, the supply pipe 22 and the discharge pipe 23 may be formed integrally.

A battery temperature regulator is provided for use with an assembled battery in which plural battery cells are arranged in alignment with each other and each of the battery cells has positive and negative terminals projecting therefrom in the same direction. The battery temperature regulator includes a heat exchanger provided between the battery cells, a supply portion through which heat medium is supplied to the heat exchanger, and a discharge portion through which heat medium is discharged out of the heat exchanger. The supply portion and the discharge portion extend in the direction of the alignment of the battery cells. At least one of the supply portion and the discharge portion is provided between the positive terminals and the negative terminals of the battery cells.

## Claims

1. A battery temperature regulator (20) for use with an assembled battery (1) in which plural battery cells (11, 12) are arranged in alignment with each other and each of the battery cells (11, 12) has positive and negative terminals (14, 15) projecting therefrom in the same direction, comprising:
a heat exchanger (21) provided between the battery cells (11, 12);
a supply portion (22) through which heat medium is supplied to the heat exchanger (21), the supply portion (22) extending in the direction of the alignment of the battery cells (11, 12); and
a discharge portion (23) through which heat medium is discharged out of the heat exchanger (21), the discharge portion (23) extending in the direction of the alignment of the battery cells (11, 12),
**characterized in that** at least one of the supply portion (22) and the discharge portion (23) is provided between the positive terminals (14) and the negative terminals (15) of the battery cells (11, 12).

2. The battery temperature regulator (20) according to claim 1, wherein both of the supply portion (22) and the discharge portion (23) are provided between the positive and negative terminals (14, 15) of the battery cells (11, 12) of the same assembled battery (1).

3. The battery temperature regulator (20) according to claim 1, wherein plural assembled batteries (1, 2, 3) are arranged in the direction perpendicular to the alignment of the battery cells (11, 12), the supply portion (22) is provided between the positive and negative terminals (14, 15) of the battery cells (11, 12) of one assembled battery (1), the discharge portion (23) is provided between the positive and negative terminals (14, 15) of the battery cells (11, 12) of another assembled battery (3).
